# EUROPEAN PATENT SPECIFICATION

(11) **EP 3 051 719 B1**
(45) Date of publication and mention of the grant of the patent: **02.10.2019**
(21) Application number: 15305086.9
(22) Date of filing: 27.01.2015
(51) Int. Cl.: H04B 10/25, H04J 14/02

(54) **A method for transmitting optical signals in a bidirectional waveguide**
Verfahren zur Übertragung optischer Signale in einem bidirektionalen Wellenleiter
Procédé pour transmettre des signaux optiques dans un guide d'ondes bidirectionnel

(43) Date of publication of application: 03.08.2016
(73) Proprietor: Alcatel Lucent, 91620 Nozay (FR)
(72) Inventor: Zami, Thierry, 91620 NOZAY (FR)
(74) Representative: Loyer & Abello

(56) References cited:
- WO-A1-2013/066520
- US-A1- 2002 093 708
- US-A1- 2007 133 995
- CHOWDHURY A ET AL: "A Self-Survivable WDM-PON Architecture with Centralized Wavelength Monitoring, Protection and Restoration for both Upstream and Downstream Links", OPTICAL FIBER COMMUNICATION/NATIONAL FIBER OPTIC ENGINEERS CONFERENCE, 2008. OFC/NFOEC 2008. CONFERENCE ON, IEEE, PISCATAWAY, NJ, USA, 24 February 2008 (2008-02-24), pages 1-3, XP031391235, ISBN: 978-1-55752-856-8

## Description

### Field of the invention

The invention relates to the technical field of optical communication systems, in particular to methods for transmitting optical signals in a bidirectional waveguide.

### Background

In order to transmit optical signals in a bidirectional waveguide, it is known to allocate two separate wavebands of adjacent channels with one waveband for each opposite direction in an optical fiber. Indeed, two counter propagating optical channels cannot be carried by a common frequency because of backscattering in the optical fiber.

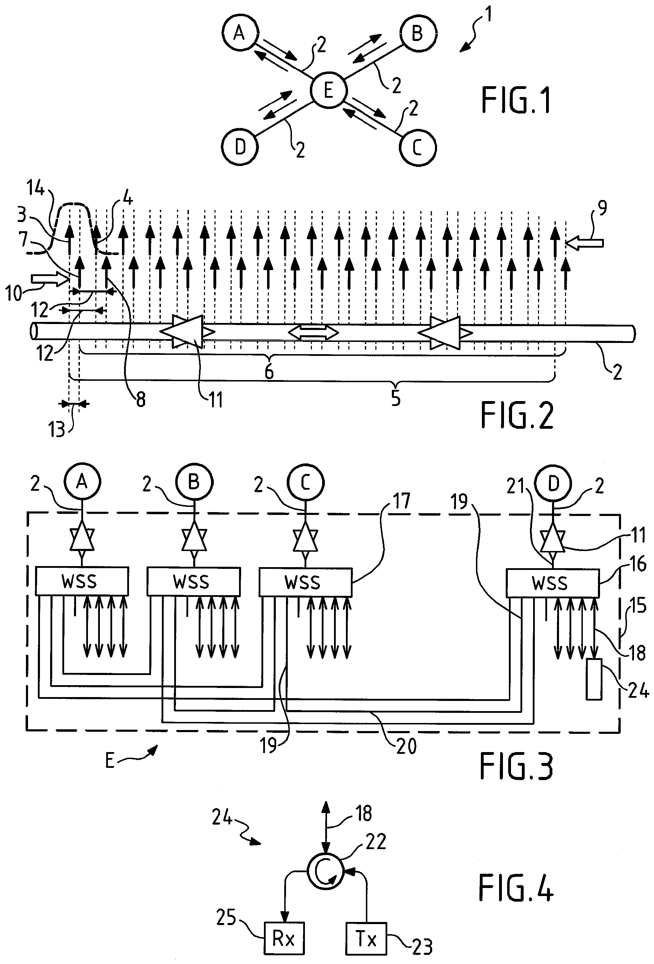

A self-Survivable WDM-PON Architecture with centralized Wavelength Monitoring, Protection and Restoration for both Upstream and Downstream Links (Chowdhury, Optical Society of America) discloses a method for transmitting a bidirectional WDM signal in a bidirectional waveguide, with interleaved upstream and downstream channels having a FSR of 100GHz between two adjacent upstream (or downstream) channels, and a divergence between two adjacent upstream and downstream channels equal to 25 GHz (see Fig 2a).

US2002/0093708 is about separating and amplifying bidirectional interleaved channels (see abstract) equidistant in the wavelength space (page 3 line 3 left hand column) from and to a component comprising a TX MUX and a RX DEMUX connected to an inter-leaver (17, fig 1 and 6) by means of a circulator.

WO2013/066520 is about a WDM OLT 155 comprising a wavelength mux/demux for broadcasting to a plurality of ONUs a bidirectional WDM signal having a 50GHz spacing between upstream and downstream wavelengths and 100GHz between neighboring upstream or downstream wavelengths (see page 7). Each adjacent upstream/downstream wavelength 225 (fig 2a) may be allocated to a single CP 150 of a ONU 145. The bidirectional WDM signal is shared between the plurality of ONUs by means of a power splitter RNPS 120 (see fig 1) and not filtered and steered wavelength per wavelength.

### Summary

Aspects of the disclosure are based on the idea of steering a pair of counter-propagating channels as a single entity.

In an embodiment, the invention provides a method for transmitting both upstream optical signals and downstream optical signals in a bidirectional waveguide, comprising :
transmitting a plurality of downstream optical signals carried on a plurality of downstream optical channels in a downstream direction at a defined baud rate, and
transmitting a plurality of upstream optical signals carried on a plurality of upstream optical channels in an upstream direction at the defined baud rate,
wherein each downstream optical channel is centered on a downstream frequency and each upstream optical channel is centered on an upstream frequency,
a minimum downstream spacing between the downstream frequencies of two adjacent downstream optical channels and a minimum upstream spacing between the upstream frequencies of two adjacent upstream optical channels being both higher than the baud rate,

Thanks to these features, the channel spacing may be narrowed for allowing a large transit capacity, while making it possible to filter individually the frequency channels in a given direction.

According to embodiments, such a method can comprise one or more of the features below.

The upstream grid and downstream grid may be irregular. In an embodiment, the downstream optical channels are arranged on a regular downstream frequency grid having a downstream grid spacing and the upstream optical channels are arranged on a regular upstream frequency grid having an upstream grid spacing.

The frequency grids may be entirely or partially filled. In an embodiment, any two adjacent downstream optical channels are separated by the downstream grid spacing on the regular downstream frequency grid, and any two adjacent upstream optical channels are separated by the upstream grid spacing on the regular upstream frequency grid. Thanks to these features, the whole frequency grid is filled so that the spectrum is used efficiently for the sake of cost-efficiency.

The downstream grid spacing and the upstream grid spacing may be equal or different. In an embodiment, the downstream grid spacing is equal to an integer multiple of the upstream grid spacing. In an embodiment, the downstream grid spacing is equal to the upstream grid spacing.

In an embodiment, the method further comprises filtering the pair of counter-propagating optical signals with a filtering window centered on a filtering frequency between the downstream and the upstream frequencies of the pair, the filtering window having a width higher than the frequency divergence and lower than the minimum downstream spacing and the minimum upstream spacing.

The pairing of the optical signals into one or more pairs comprising one upstream signal and one downstream signal spaced by a relatively small frequency divergence may be implemented for some or all of the optical signals being transmitted.

In an embodiment, the optical signals comprise a second pair of counter-propagating optical signals carried by a second downstream optical channel and an adjacent second upstream optical channel, wherein the downstream frequency and the upstream frequency of the second pair of counter propagating signals are separated by a second frequency divergence which is lower than half the minimum downstream spacing and lower than half the minimum upstream spacing.

In an embodiment, the method further comprises filtering the second pair of counter-propagating optical signals with a second filtering window centered on a second filtering frequency between the downstream and the upstream frequencies of the second pair, the second filtering window having a width higher than the second frequency divergence and lower than the minimum downstream spacing and the minimum upstream spacing.

In an embodiment, some or all the optical signals constitute respective pairs of counter-propagating optical signals, each pair of counter-propagating optical signals being carried by a respective downstream optical channel and an adjacent respective upstream optical channel, wherein the downstream frequency and the upstream frequency of each respective pair of counter propagating signals are separated by a respective frequency divergence which is lower than half the minimum downstream spacing and lower than half the minimum upstream spacing.

In an embodiment, the method further comprises filtering each respective pair of counter-propagating optical signals with a respective filtering window centered on a respective filtering frequency between the downstream and the upstream frequencies of the respective pair, the respective filtering window having a width higher than the respective frequency divergence and lower than the minimum downstream spacing and the minimum upstream spacing.

In an embodiment, the filtering is performed by a Wavelength Selective Switch WSS, the WSS comprising an input port and a plurality of selective output ports, and being arranged as a programmable wavelength demultiplexer in the downstream direction and as a programmable wavelength multiplexer in the upstream direction, the plurality of downstream signals being transmitted from a first waveguide to the input port of the WSS, the plurality of upstream signals being transmitted from a second waveguide to the output ports of the WSS, wherein the filtering of the pair of counter-propagating optical signals is performed between the input port and a selective output port. Thanks to these features, the total number of WSSs required for the filtering is divided by two compared to the case where a unidirectional WSS is used for each opposite direction.

In an embodiment, the method further comprises transmitting the downstream optical signal of the pair of counter-propagating optical signals from the selective output port to an add-and-drop module port and transmitting the upstream optical signal of the pair of counter-propagating optical signals from the add-and-drop module port to the selective output port.

In an embodiment, the method further comprises transmitting the downstream optical signal of the second pair of counter-propagating optical signals from the selective output port to a WSS port of a second WSS and transmitting the upstream optical signal of the second pair of counter-propagating optical signals from the WSS port of the second WSS to the selective output port.

In an embodiment, the minimum downstream spacing between the downstream frequencies of two adjacent downstream optical channels and the minimum upstream spacing between the upstream frequencies of two adjacent upstream optical channels are both higher than 2 times the baud rate.

In an embodiment, bidirectional amplifiers are used along the bidirectional waveguide.

Bidirectional amplifiers are devices able to amplify both an upstream optical signal and a downstream optical signal. Such bidirectional amplifiers may be constituted, for example, of two optical circulators and two optical amplifiers, each on a dedicated optical direction.

The invention also provides an optical apparatus for use in a WDM optical network, comprising:
a WDM bidirectional input port adapted to receive downstream optical signals in a downstream direction and to transmit upstream optical signals in an upstream direction,
a Wavelength Selective Switch WSS having a WSS common port connected to the WDM bidirectional input port and a plurality of selective ports, the WSS being arranged as a programmable wavelength demultiplexer for the downstream optical signals incoming into the common port, and as a programmable wavelength multiplexer for the upstream optical signals incoming from the selective ports,an add and drop module being connected to one of the selective ports,
the add and drop module comprising a transmitter and a receiver,
the transmitter being configured to transmit an upstream optical signal on an upstream optical channel centered on an upstream frequency modulated at a Baud rate to the selective port, the WSS being configured to steer the upstream optical signal from the selective port to the WSS common port,
the receiver being configured to receive a downstream optical signal on a downstream optical channel centered on a downstream frequency at the Baud rate from the selective port, the WSS being configured to steer the downstream optical signal from the WSS common port to the selective port, the upstream and downstream frequencies (3, 7) being separated by a frequency divergence lower than the Baud rate.

Thanks to these features, such an apparatus may be employed in the above described method for transmitting both upstream optical signals and downstream optical signals in a bidirectional waveguide.

Aspects of the invention stem from the observation that the interleaving of upstream and downstream optical signals according to a uniform channel spacing would impose a non-optimal compromise between the ability to transmit a high capacity and the ability to filter the transmitted signals.

### Brief description of the drawings

These and other aspects of the invention will be apparent from and elucidated with reference to the embodiments described hereinafter, by way of non-limitative examples, with reference to the drawings.
Figure 1 is an exemplary functional representation of an optical WDM network comprising five optical nodes.
Figure 2 is an illustration of an optical fiber for transmitting a bidirectional optical signal carried by optical channels which central frequencies are represented on a frequency grid according to an embodiment.
Figure 3 is a schematic of an optical cross connect according to an embodiment.
Figure 4 is a schematic of a bidirectional add and drop module in an embodiment.

### Detailed description of illustrative embodiments

In a transparent WDM optical network, optical switching nodes are connected by optical links to form a given topology.

In an illustrative example, with reference to Figure 1, an optical WDM network 1 is represented. The nodes are represented by circles and denoted by letters from A to E. The central node E is linked by each other nodes by optical links 2. In this example, the connectivity degree of the node E is equal to 4. For example, data encoded in an optical signal transmitted by the node A to the node B are routed by the node E. Such a node E may comprise an optical switching apparatus.

The above illustrated network is represented for the sake of illustration. In a general case, the number of adjacent nodes may be any number equal to or higher than 2.

With reference to Figure 2, an illustration of an optical fiber 2 for transmitting a bidirectional optical signal is represented. The optical fiber 2 transmits downstream optical signals carried by downstream optical channels in the downstream direction 10. The downstream optical channels are centered on a downstream frequency 7, 8 on a regular downstream WDM comb 6. The optical fiber also transmits upstream optical signals carried by upstream optical channels in the upstream direction 9. The upstream optical channels are centered on an upstream frequency 3, 4 on a regular upstream WDM comb 5. Both the downstream WDM comb 6 and the upstream WDM comb 5 are fully filled, meaning that the WDM combs are occupied by optical signals carried on each frequency of the comb.

The downstream WDM comb 6 and the upstream WDM comb 5 have the same grid spacing 12. The downstream WDM comb 6 and the upstream WDM comb 5 are shifted by a frequency divergence 13, which is lower than half the grid spacing 12. The frequency divergence 13 is such that the frequency distance between a downstream frequency 7 and an adjacent upstream frequency 3 is narrower than the frequency distance between the downstream frequency 7 and another adjacent upstream frequency 4. The downstream optical channel centered on the downstream frequency 7 and the upstream optical channel centered on the narrowest upstream frequency 3 carry a pair of counter propagating optical signals.

The pair of counter propagating optical signals is filtered at the end of the optical fiber 2 by a filtering window 14 which is frequency centered on the middle of the downstream frequency 7 and the upstream frequency 3. The width of the filtering window 14 is higher than the frequency divergence in order to allow filtering both the downstream optical signal on the downstream frequency 7 and the upstream optical signal on the upstream frequency 3. The width of the filtering window 14 is lower than the grid spacing 12 in order to allow filtering the adjacent pair of counter propagating optical signals with an adjacent filtering window without inducing crosstalk penalties due to overlapping of undesirable too narrow adjacent optical channels.

The counter propagating optical signals carried by the optical channels are transmitted with a fixed Baud rate. The grid spacing 12 is higher than the Baud rate. Indeed, in a direction, the grid spacing 12 should be higher than the Nyquist bandwidth, which is equal to the signal baud rate. Preferably, the grid spacing 12 should be higher than 2 times the Baud rate in the case where the counter propagating optical signals experience about ten filtering stages in order to avoid too harmful filtering penalties.

More details about the relationship between the Baud rate and the grid spacing are given in the following articles:
- Modeling of the Impact of Nonlinear Propagation Effects in Uncompensated Optical Coherent Transmission Links. A. Carena, V. Curri, G. Bosco, P. Poggiolini, and F. Forghieri. Journal of Lightwave Technology, Vol. 30, Issue 10, pp. 1524-1539 (2012).
- On the Performance of Nyquist-WDM Terabit Superchannels Based on PM-BPSK, PM-QPSK, PM-8QAM or PM-16QAM Subcarriers. Gabriella Bosco, Vittorio Curri, Andrea Carena, Pierluigi Poggiolini, and Fabrizio Forghieri. Journal of Lightwave Technology, Vol. 29, Issue 1, pp. 53-61 (2011).

An advantage of interleaving the downstream and upstream channels is that the grid spacing 12 between two adjacent same-directional channels is higher than the Nyquist bandwidth, or higher than 2 times the Baud rate, while increasing the overall capacity transmitted per fiber and keeping single signal routing that is more convenient than superchannels for WDM networks. Two optical signals carried by two adjacent upstream channels are still filterable and two optical signals carried by two adjacent downstream channels are still filterable. Indeed, a pair of counter-propagating optical signals is filterable as a whole.

With reference to Figure 3, a schematic of an optical cross connect 15 belonging to a node E is represented. For the sake of illustration, the optical nodes A, B, C, D and E represented are those of the network illustrated on Figure 1. The respective adjacent optical nodes A, B, C and D are connected to the optical cross connect 15 thanks to respective optical fibers 2 connected to WSS ports 21 of WSSs 16, 17.

A WSS 16, 17 is a device which acts as a programmable wavelength demultiplexer in the downstream direction and as a programmable wavelength multiplexer in the upstream direction. When it is acting as a multiplexer, i.e. for upstream optical signals, a plurality of selectable ports 18, 19 serve as WSS input ports, and a common port serves as a WSS output port 21. When it is acting as a demultiplexer, i.e. for downstream optical signals, the WSS port 21 serves as an input port and the plurality of selectable ports 18, 19 serve as output ports.

Functional features of such a WSS are described below.

For instance, the WSS 16 comprises grating components capable of separating a downstream optical signal received at the WSS port 21 into a plurality of beams corresponding to predefined downstream channels defined on the downstream WDM comb 6, and light steering means capable of steering independently the optical beam corresponding to a respective downstream channel either towards a selectable port 18, towards a selectable port 19 or towards an absorber. Thereby, the spectral component of the downstream WDM optical signal belonging to a first downstream channel can be routed to a second WSS 17 when the optical beam is steered to the selectable port 19. Thereby, the spectral component of the downstream WDM optical signal belonging to a second downstream channel can be routed to a bidirectional add-and-drop module 24. The same function is achieved for each downstream channel to each selectable port 18, 19.

The WSS 16 thereby carries out a reconfigurable demultiplexing function on downstream optical signal carried by the downstream channels whose downstream frequencies are aligned with the downstream WDM comb 6. It makes it possible to pass, from the common WSS port 21 to each selectable port 18, 19, one downstream channel selected from among the downstream optical signals received at the WSS port 21.

The switching or steering of beams within the WSS 16 is produced by spatial light manipulation elements, such as micromirrors activated by micro electro-mechanical systems (MEMS) micro-actuators or liquid crystal cells. In addition to selecting the spectral bands, these elements may be capable of adjusting the signal attenuation for each spectral band. In this manner, the WSS 16 serves to both select the spectral bands that must be passed to a given selectable port 18, 19 and to adjust their output power band-by-band towards the corresponding selectable port 18, 19.

The WSS 16 also acts as a multiplexer in the upstream direction. When the WSS 16 is acting as a multiplexer, a plurality of upstream optical signals carried by upstream channels on the upstream WDM comb 5 are combined from in the plurality of selectable port 18, 19 to the WSS port 21 connected to the WDM optical fiber 2.

The configuration state of such WSSs is driven as follow: the control plane determines which wavelength channel of the incoming WDM optical signal arriving from one of the nodes A, B, C and D has to be detected and steered to an adjacent node or to an add-and-drop module 24. If a downstream optical signal which is incoming from node D on a downstream channel arrives at the WSS port 21 of the WSS 16 and is supposed to be routed to node C, then the WSS 16 steers it from the WSS port 21 to a selectable port 19 of the WSS 16 linked by a fiber 20 to a selectable port 19 of the WSS 17. Then, the WSS 17 routes it to the optical fiber 2 connected to node C.

The driving commands of the WSS 16 are the identification of the band of optical frequencies for which a path should be established between a WSS port and a selectable port, by means of two optical frequencies defining the band of optical frequencies and port identifiers identifying the corresponding pair of input port and output port.

For the sake of illustration, with reference to Figure 4, a bidirectional add-and-drop module 24 used in the optical cross connect represented on Figure 3 is represented. The add-and-drop module 24 comprises the bidirectional port 18, an optical circulator 22, a transmitter 23 and a receiver 25. The transmitter 23 transmits an upstream optical signal to the bidirectional port 18 via the optical circulator 22. The receiver 25 receives a downstream optical signal from the bidirectional port 18 via the optical circulator 22. The optical circulator 22 is a three-port device designed such that light entering any port exits from the next, thanks to high optical isolation. The downstream optical signal is demodulated in the receiver 25 and the upstream optical signal is emitted and modulated by the transmitter 23. The downstream optical signal has the downstream frequency 7 and the upstream optical signal has the upstream frequency 3.

The width of the upstream channels and downstream channels switched by the WSS 16 depends on the design of the WSS. The downstream optical signal and the upstream optical signal are filtered as a single entity by the WSS 16. Therefore and for example, the WSS 16 is transparent in the downstream direction for the downstream optical signal which has the downstream frequency 7 and which is intended to be demodulated by the receiver 25. Therefore and for example, the WSS 16 is transparent in the upstream direction for the upstream optical signal which has the upstream frequency 3 and which is transmitted by the transmitter 23. The single-entity filtering enables to use a single WSS for both directions, as well as a single bidirectional amplifier 11 at the input of the WSS 16. The bidirectional single-entity filtering thus enables to save a lot of WSSs and amplifiers.

Some advanced WSSs can also provide an adaptable filtering function with adjustable spectral width. This feature makes it possible to implement flexible optical frequency grids in the WDM network, i.e. so-called gridless signals. For the sake of clarity, the filter width of the WSS 16 corresponds to the grid spacing 12 which is equal to 3/2 times the grid spacing of a standard ITU grid in the above non limitative example.

The invention is not limited to the described embodiments. The appended claims are to be construed as embodying all modifications and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

## Claims

1. A method for transmitting both upstream optical signals and downstream optical signals in a bidirectional waveguide, comprising :
transmitting a plurality of downstream optical signals carried on a plurality of downstream optical channels in a downstream direction (10) at a baud rate, and
transmitting a plurality of upstream optical signals carried on a plurality of upstream optical channels in an upstream direction (9) at the baud rate,
wherein each downstream optical channel is centered on a downstream frequency (7, 8), and each upstream optical channel is centered on an upstream frequency (3, 4),
wherein a minimum downstream spacing (12) between the downstream frequencies (7, 8) of two adjacent downstream optical channels and a minimum upstream spacing (12) between the upstream frequencies (3, 4) of two adjacent upstream optical channels being both higher than the baud rate,
wherein the optical signals comprise a first pair of counter-propagating optical signals carried by a first downstream optical channel and an adjacent first upstream optical channel, wherein the downstream frequency (7) and the upstream frequency (3) of the first pair of counter propagating signals are separated by a first frequency divergence (13) which is lower than half the minimum downstream spacing (12) and lower than half the minimum upstream spacing (12),
wherein the optical signals comprise a second pair of counter-propagating optical signals carried by a second downstream optical channel and an adjacent second upstream optical channel, wherein the downstream frequency (8) and the upstream frequency (4) of the second pair of counter propagating signals are separated by a second frequency divergence which is lower than half the minimum downstream spacing and lower than half the minimum upstream spacing,
the method further comprising:
filtering the first pair of counter-propagating optical signals (3,7) with a first filtering window (14) centered on a filtering frequency between the downstream (7) and the upstream (3) frequencies of the first pair, the first filtering window (14) having a width higher than the frequency divergence (13) and lower than the minimum downstream spacing (12) and the minimum upstream spacing (12), filtering the second pair of counter-propagating optical signals with a second filtering window centered on a second filtering frequency between the downstream and the upstream frequencies of the second pair, the second filtering window having a width higher than the second frequency divergence and lower than the minimum downstream spacing and the minimum upstream spacing,
**characterized in that** the filtering is performed by a Wavelength Selective Switch WSS (16, 17), the WSS (16) comprising an input port (21) and a plurality of selective output ports (19, 18), and being arranged as a programmable wavelength demultiplexer in the downstream direction (10) and as a programmable wavelength multiplexer in the upstream direction (9), the plurality of downstream optical signals being transmitted from a first waveguide (2) to the input port (21) of the WSS (16), the plurality of upstream optical signals being transmitted from a second waveguide (20) to the output ports (19) of the WSS (16), wherein the filtering of the first pair of counter-propagating optical signals is performed between the input port (21) and a first selective output port (19) and the filtering of the second pair of counter-propagating optical signals is performed between the input port (21) and a second selective output port

2. The method according to claim 1, wherein the downstream optical channels are arranged on a regular downstream frequency grid (6) having a downstream grid spacing (12) and the upstream optical channels are arranged on a regular upstream frequency grid (5) having an upstream grid spacing (12).

3. The method according to claim 2, wherein any two adjacent downstream optical channels (7, 8) are separated by the downstream grid spacing (12) on the regular downstream frequency grid (6), and any two adjacent upstream optical channels (3, 4) are separated by the upstream grid spacing (12) on the regular upstream frequency grid (5).

4. The method according to any one of claim 2 to claim 3, wherein the downstream grid spacing (12) is equal to an integer multiple of the upstream grid spacing (12).

5. The method according to claim 4, wherein the downstream grid spacing (12) is equal to the upstream grid spacing (12).

6. The method according to claim 1, wherein the optical signals constitute respective pairs of counter-propagating optical signals, each pair of counter-propagating optical signals being carried by a respective downstream optical channel and an adjacent respective upstream optical channel, wherein the downstream frequency and the upstream frequency of each respective pair of counter propagating signals are separated by a respective frequency divergence which is lower than half the minimum downstream spacing and lower than half the minimum upstream spacing.

7. The method according to claim 6, further comprising:
filtering each respective pair of counter-propagating optical signals with a respective filtering window centered on a respective filtering frequency between the downstream and the upstream frequencies of the respective pair, the respective filtering window having a width higher than the respective frequency divergence and lower than the minimum downstream spacing and the minimum upstream spacing.

8. The method according to claim 1, further comprising:
transmitting the downstream (7) optical signal of the pair of counter-propagating optical signals (3, 7) from the selective output port (18) to an add-and-drop module (24) port and transmitting the upstream (3) optical signal of the pair of counter-propagating optical signals from the add-and-drop module port (24) to the selective output port (18).

9. The method according to claim 1 or claim 8, further comprising:
transmitting the downstream (8) optical signal of the second pair of counter-propagating optical signals from the selective output port (19) to a WSS port of a second WSS (17) and transmitting the upstream (4) optical signal of the second pair of counter-propagating optical signals from the WSS port of the second WSS (17) to the selective output port (19).

10. The method according to any one of claim 1 to claim 9, wherein the minimum downstream spacing (12) between the downstream frequencies of two adjacent downstream optical channels and the minimum upstream spacing (12) between the upstream frequencies of two adjacent upstream optical channels are both higher than 2 times the baud rate.

11. An optical apparatus (E) for use in a WDM optical network (1), comprising:
a WDM bidirectional input port (2) adapted to receive downstream optical signals in a downstream direction (10) at a baud rate and to transmit upstream optical signals in an upstream direction (9) at the baud rate,
wherein each downstream optical channel is centered on a downstream frequency (7, 8), and each upstream optical channel is centered on an upstream frequency (3, 4),
wherein a minimum downstream spacing (12) between the downstream frequencies (7, 8) of two adjacent downstream optical channels and a minimum upstream spacing (12) between the upstream frequencies (3, 4) of two adjacent upstream optical channels being both higher than the baud rate,
wherein the optical signals comprise a first pair of counter-propagating optical signals carried by a downstream optical channel and an adjacent upstream optical channel, wherein the downstream frequency (7) and the upstream frequency (3) of the first pair of counter propagating signals are separated by a first frequency divergence (13) which is lower than half the minimum downstream spacing (12) and lower than half the minimum upstream spacing (12),
wherein the optical signals comprise a second pair of counter-propagating optical signals carried by a second downstream optical channel and an adjacent second upstream optical channel, wherein the downstream frequency (8) and the upstream frequency (4) of the second pair of counter propagating signals are separated by a second frequency divergence which is lower than half the minimum downstream spacing and lower than half the minimum upstream spacing, a component having a WSS common port (21) connected to the WDM bidirectional input port (2) and a plurality of selective ports (18),
an add and drop module (24) being connected to one of the selective ports,
the add and drop module comprising a transmitter (23) and a receiver (25),
the transmitter (23) being configured to transmit the upstream optical signal modulated at the baud rate to the selective port (18),
the receiver (25) being configured to receive the downstream optical signal modulated at the baud rate from the selective port (18), **characterized in that** the component is a Wavelength Selective Switch WSS (16), the WSS (16) being configured to filter the first pair of counter-propagating optical signals (3, 7) with a first filtering window (14) centered on a filtering frequency between the downstream (7) and the upstream (3) frequencies of the first pair, the first filtering window (14) having a width higher than the first frequency divergence (13) and lower than the minimum downstream spacing (12) and the minimum upstream spacing (12), filtering the second pair of counter propagating optical signals with a second filtering window centered on a second filtering frequency between the downstream and the upstream frequencies of the second pair, the second filtering window having a width higher than the second frequency divergence and lower than the minimum downstream spacing and the minimum upstream spacing, and
steer the upstream optical signal from the selective port (18) to the WSS common port (21), the WSS being arranged as a programmable wavelength demultiplexer for the downstream optical signals incoming into the common port (21), and as a programmable wavelength multiplexer for the upstream optical signals incoming from the selective ports (18), the WSS (16) being configured to steer the downstream optical signal from the WSS common port (21) to the selective port (18),
wherein the plurality of downstream optical signals being transmitted from a first waveguide (2) to the input port (21) of the WSS (16), the plurality of upstream optical signals being transmitted from a second waveguide (20) to the output ports (19) of the WSS (16), wherein the WSS is configured to perform filtering of the first pair of counter propagating optical signals between the input port (21) and a first selective output port (19) and perform filtering of the second pair of counter-propagating optical signals between the input port (21) and a second selective output port.

## Patentansprüche

1. Verfahren zum Übertragen von sowohl optischen Upstream-Signalen als auch optischen Downstream-Signalen in einem bidirektionalen Wellenleiter, umfassend:
Übertragen einer Vielzahl optischer Downstream-Signale, die auf einer Vielzahl optischer Downstream-Kanäle in einer Downstream-Richtung (10) mit einer Baudrate transportiert werden, und
Übertragen einer Vielzahl optischer Upstream-Signale, die auf einer Vielzahl optischer Upstream-Kanäle in einer Upstream-Richtung (9) mit der Baudrate transportiert werden,
wobei jeder optische Downstream-Kanal auf einer Downstream-Frequenz (7, 8) zentriert ist und jeder optische Upstream-Kanal auf einer Upstream-Frequenz (3, 4) zentriert ist,
wobei sowohl ein Downstream-Mindestabstand (12) zwischen den Downstream-Frequenzen (7, 8) zweier benachbarter optischer Downstream-Kanäle als auch ein Upstream-Mindestabstand (12) zwischen den Upstream-Frequenzen (3, 4) zweier benachbarter optischer Upstream-Kanäle größer als die Baudrate ist,
wobei die optischen Signale ein erstes Paar sich entgegengesetzt ausbreitender optischer Signale umfassen, die durch einen ersten optischen Downstream-Kanal und einen benachbarten ersten optischen Upstream-Kanal transportiert werden, wobei die Downstream-Frequenz (7) und die Upstream-Frequenz (3) des ersten Paares sich entgegengesetzt ausbreitender Signale durch einen ersten Frequenzunterschied (13) voneinander getrennt sind, der kleiner als die Hälfte des Downstream-Mindestabstands (12) und kleiner als die Hälfte des Upstream-Mindestabstands (12) ist,
wobei die optischen Signale ein zweites Paar sich entgegengesetzt ausbreitender optischer Signale umfassen, die durch einen zweiten optischen Downstream-Kanal und einen benachbarten zweiten optischen Upstream-Kanal transportiert werden, wobei die Downstream-Frequenz (8) und die Upstream-Frequenz (4) des zweiten Paares sich entgegengesetzt ausbreitender Signale durch einen zweiten Frequenzunterschied voneinander getrennt sind, der kleiner als die Hälfte des Downstream-Mindestabstands und kleiner als die Hälfte des Upstream-Mindestabstands ist,
wobei das Verfahren ferner umfasst:
Filtern des ersten Paares sich entgegensetzt ausbreitender optischer Signale (3, 7) mit einem ersten Filterungsfenster (14), das auf einer Filterungsfrequenz zwischen der Downstream- (7) und der Upstream-Frequenz (3) des ersten Paares zentriert ist, wobei das erste Filterungsfenster (14) eine Breite aufweist, die größer als der Frequenzunterschied (13) und kleiner als der Downstream-Mindestabstand (12) und der Upstream-Mindestabstand (12) ist, Filtern des zweiten Paares sich entgegengesetzt ausbreitender optischer Signale mit einem zweiten Filterungsfenster, das auf einer zweiten Filterungsfrequenz zwischen der Downstream- und der Upstream-Frequenz des zweiten Paares zentriert ist, wobei das zweite Filterungsfenster eine Breite aufweist, die größer als der zweite Frequenzunterschied und kleiner als der Downstream-Mindestabstand und der Upstream-Mindestabstand ist,
**dadurch gekennzeichnet, dass** das Filtern durch einen wellenlängenselektiven Schalter WSS (16, 17) durchgeführt wird, wobei der WSS (16) einen Eingangsanschluss (21) und eine Vielzahl selektiver Ausgangsanschlüsse (19, 18) umfasst und als ein programmierbarer Wellenlängendemultiplexer in der Downstream-Richtung (10) und als ein programmierbarer Wellenlängenmultiplexer in der Upstream-Richtung (9) angeordnet ist, wobei die Vielzahl optischer Downstream-Signale von einem ersten Wellenleiter (2) zum Eingangsanschluss (21) des WSS (16) übertragen wird, wobei die Vielzahl optischer Upstream-Signale von einem zweiten Wellenleiter (20) zu den Ausgangsanschlüssen (19) des WSS (16) übertragen wird, wobei das Filtern des ersten Paares sich entgegengesetzt ausbreitender optischer Signale zwischen dem Eingangsanschluss (21) und einem ersten selektiven Ausgangsanschluss (19) durchgeführt wird und das Filtern des zweiten Paares sich entgegengesetzt ausbreitender optischer Signale zwischen dem Eingangsanschluss (21) und einem zweiten selektiven Ausgangsanschluss durchgeführt wird.

2. Verfahren nach Anspruch 1, wobei die optischen Downstream-Kanäle auf einem regelmäßigen Downstream-Frequenzgitter (6) angeordnet sind, das einen Downstream-Gitterabstand (12) aufweist, und die optischen Upstream-Kanäle auf einem regelmäßigen Upstream-Frequenzgitter (5) angeordnet sind, das einen Upstream-Gitterabstand (12) aufweist.

3. Verfahren nach Anspruch 2, wobei beliebige zwei benachbarte optische Downstream-Kanäle (7, 8) durch den Downstream-Gitterabstand (12) auf dem regelmäßigen Downstream-Frequenzgitter (6) getrennt sind und beliebige zwei benachbarte optische Upstream-Kanäle (3, 4) durch den Upstream-Gitterabstand (12) auf dem regelmäßigen Upstream-Frequenzgitter (5) getrennt sind.

4. Verfahren nach einem der Ansprüche 2 bis 3, wobei der Downstream-Gitterabstand (12) gleich einem ganzzahligen Vielfachen des Upstream-Gitterabstands (12) ist.

5. Verfahren nach Anspruch 4, wobei der Downstream-Gitterabstand (12) gleich dem Upstream-Gitterabstand (12) ist.

6. Verfahren nach Anspruch 1, wobei die optischen Signale jeweilige Paare sich entgegengesetzt ausbreitender optischer Signale bilden, wobei jedes Paar sich entgegengesetzt ausbreitender optischer Signale durch einen jeweiligen optischen Downstream-Kanal und einen benachbarten jeweiligen optischen Upstream-Kanal transportiert wird, wobei die Downstream-Frequenz und die Upstream-Frequenz jedes jeweiligen Paares sich entgegengesetzt ausbreitender Signale durch einen jeweiligen Frequenzunterschied getrennt sind, der kleiner als die Hälfte des Downstream-Mindestabstands und kleiner als die Hälfte des Upstream-Mindestabstands ist.

7. Verfahren nach Anspruch 6, ferner umfassend:
Filtern jedes jeweiligen Paares sich entgegensetzt ausbreitender optischer Signale mit einem jeweiligen Filterungsfenster, das auf einer jeweiligen Filterungsfrequenz zwischen der Downstream- und der Upstream-Frequenz des jeweiligen Paares zentriert ist, wobei das jeweilige Filterungsfenster eine Breite aufweist, die größer als der jeweilige Frequenzunterschied und kleiner als der Downstream-Mindestabstand und der Upstream-Mindestabstand ist.

8. Verfahren nach Anspruch 1, ferner umfassend:
Übertragen des optischen Downstream-Signals (7) des Paares sich entgegensetzt ausbreitender optischer Signale (3, 7) vom selektiven Ausgangsanschluss (18) zu einem Add-and-Drop-Modul-Anschluss (24) und Übertragen des optischen Upstream-Signals (3) des Paares sich entgegengesetzt ausbreitender optischer Signale vom Add-and-Drop-Modul-Anschluss (24) zum selektiven Ausgangsanschluss (18).

9. Verfahren nach Anspruch 1 oder Anspruch 8, ferner umfassend:
Übertragen des optischen Downstream-Signals (8) des zweiten Paares sich entgegensetzt ausbreitender optischer Signale vom selektiven Ausgangsanschluss (19) zu einem WSS-Anschluss eines zweiten WSS (17) und Übertragen des optischen Upstream-Signals (4) des zweiten Paares sich entgegengesetzt ausbreitender optischer Signale vom WSS-Anschluss des zweiten WSS (17) zum selektiven Ausgangsanschluss (19).

10. Verfahren nach einem der Ansprüche 1 bis 9, wobei sowohl der Downstream-Mindestabstand (12) zwischen den Downstream-Frequenzen zweier benachbarter optischer Downstream-Kanäle als auch der Upstream-Mindestabstand (12) zwischen den Upstream-Frequenzen zweier benachbarter optischer Upstream-Kanäle größer als das Zweifache der Baudrate ist.

11. Optische Vorrichtung (E) zur Verwendung in einem optischen WDM-Netzwerk (1), umfassend:
einen bidirektionalen WDM-Eingangsanschluss (2), der eingerichtet ist, um optische Downstream-Signale in einer Downstream-Richtung (10) mit einer Baudrate zu empfangen und optische Upstream-Signale in einer Upstream-Richtung (9) mit der Baudrate zu übertragen,
wobei jeder optische Downstream-Kanal auf einer Downstream-Frequenz (7, 8) zentriert ist und jeder optische Upstream-Kanal auf einer Upstream-Frequenz (3, 4) zentriert ist,
wobei sowohl ein Downstream-Mindestabstand (12) zwischen den Downstream-Frequenzen (7, 8) zweier benachbarter optischer Downstream-Kanäle als auch ein Upstream-Mindestabstand (12) zwischen den Upstream-Frequenzen (3, 4) zweier benachbarter optischer Upstream-Kanäle größer als die Baudrate ist,
wobei die optischen Signale ein erstes Paar sich entgegengesetzt ausbreitender optischer Signale umfassen, die durch einen optischen Downstream-Kanal und einen benachbarten optischen Upstream-Kanal transportiert werden, wobei die Downstream-Frequenz (7) und die Upstream-Frequenz (3) des ersten Paares sich entgegengesetzt ausbreitender Signale durch einen ersten Frequenzunterschied (13) voneinander getrennt sind, der kleiner als die Hälfte des Downstream-Mindestabstands (12) und kleiner als die Hälfte des Upstream-Mindestabstands (12) ist,
wobei die optischen Signale ein zweites Paar sich entgegengesetzt ausbreitender optischer Signale umfassen, die durch einen zweiten optischen Downstream-Kanal und einen benachbarten zweiten optischen Upstream-Kanal transportiert werden, wobei die Downstream-Frequenz (8) und die Upstream-Frequenz (4) des zweiten Paares sich entgegengesetzt ausbreitender Signale durch einen zweiten Frequenzunterschied voneinander getrennt sind, der kleiner als die Hälfte des Downstream-Mindestabstands und kleiner als die Hälfte des Upstream-Mindestabstands ist,
eine Komponente mit einem gemeinsamen WSS-Anschluss (21), der mit dem bidirektionalen WDM-Eingangsanschluss (2) und einer Vielzahl selektiver Anschlüsse (18) verbunden ist,
ein Add-and-Drop-Modul (24), das mit einem der selektiven Anschlüsse verbunden ist,
wobei das Add-and-Drop-Modul einen Sender (23) und einen Empfänger (25) umfasst,
wobei der Sender (23) ausgelegt ist, um das mit der Baudrate modulierte optische Upstream-Signal zum selektiven Anschluss (18) zu übertragen,
wobei der Empfänger (25) ausgelegt ist, um das mit der Baudrate modulierte optische Downstream-Signal vom selektiven Anschluss (18) zu empfangen,
**dadurch gekennzeichnet, dass** die Komponente ein wellenlängenselektiver Schalter WSS (16) ist, wobei der WSS (16) eingerichtet ist, um das erste Paar sich entgegensetzt ausbreitender optischer Signale (3, 7) mit einem ersten Filterungsfenster (14) zu filtern, das auf einer Filterungsfrequenz zwischen der Downstream-(7) und der Upstream-Frequenz (3) des ersten Paares zentriert ist, wobei das erste Filterungsfenster (14) eine Breite aufweist, die größer als der erste Frequenzunterschied (13) und kleiner als der Downstream-Mindestabstand (12) und der Upstream-Mindestabstand (12) ist, das zweite Paar sich entgegengesetzt ausbreitender optischer Signale mit einem zweiten Filterungsfenster zu filtern, das auf einer zweiten Filterungsfrequenz zwischen der Downstream- und der Upstream-Frequenz des zweiten Paares zentriert ist, wobei das zweite Filterungsfenster eine Breite aufweist, die größer als der zweite Frequenzunterschied und kleiner als der Downstream-Mindestabstand und der Upstream-Mindestabstand ist, und
das optische Upstream-Signal vom selektiven Anschluss (18) zum gemeinsamen WSS-Anschluss (21) zu lenken, wobei der WSS als ein programmierbarer Wellenlängendemultiplexer für die am gemeinsamen Anschluss (21) eingehenden optischen Downstream-Signale und als ein programmierbarer Wellenlängenmultiplexer für die von den selektiven Anschlüssen (18) eingehenden optischen Upstream-Signale angeordnet ist, wobei der WSS (16) ausgelegt ist, um das optische Downstream-Signal vom gemeinsamen WSS-Anschluss (21) zum selektiven Anschluss (18) zu lenken,
wobei die Vielzahl optischer Downstream-Signale von einem ersten Wellenleiter (2) zum Eingangsanschluss (21) des WSS (16) übertragen wird, die Vielzahl optischer Upstream-Signale von einem zweiten Wellenleiter (20) zu den Ausgangsanschlüssen (19) des WSS (16) übertragen wird, wobei der WSS ausgelegt ist, um ein Filtern des ersten Paares sich entgegengesetzt ausbreitender optischer Signale zwischen dem Eingangsanschluss (21) und einem ersten selektiven Ausgangsanschluss (19) durchzuführen und ein Filtern des zweiten Paares sich entgegengesetzt ausbreitender optischer Signale zwischen dem Eingangsanschluss (21) und einem zweiten selektiven Ausgangsanschluss durchzuführen.

## Revendications

1. Procédé de transmission de signaux optiques en amont et de signaux optiques en aval dans un guide d'ondes bidirectionnel, comprenant:
la transmission d'une pluralité de signaux optiques en aval acheminés sur une pluralité de canaux optiques en aval dans une direction en aval (10) à une vitesse de transmission en bauds, et
la transmission d'une pluralité de signaux optiques en amont acheminés sur une pluralité de canaux optiques en amont dans une direction en amont (9) à la vitesse de transmission en bauds, et
dans lequel chaque canal optique en aval est centré sur une fréquence aval (7, 8) et chaque canal optique en amont est centré sur une fréquence amont (3, 4),
dans lequel un espacement minimal en aval (12) entre les fréquences aval (7, 8) de deux canaux optiques en aval adjacents et un espacement minimal en amont (12) entre les fréquences amont (3, 4) de deux canaux optiques en amont adjacents sont tous deux supérieurs à la vitesse de transmission en bauds,
dans lequel les signaux optiques comprennent une première paire de signaux optiques à propagation inverse acheminés par un premier canal optique en aval et un premier canal optique en amont adjacent, dans lequel la fréquence aval (7) et la fréquence amont (3) de la première paire de signaux à propagation inverse sont séparées par une première divergence de fréquence (13) qui est inférieure à la moitié de l'espacement minimal en aval (12) et inférieure à la moitié de l'espacement minimal en amont (12),
dans lequel les signaux optiques comprennent une seconde paire de signaux optiques à propagation inverse acheminés par un second canal optique en aval et un second canal optique en amont adjacent, dans lequel la fréquence aval (8) et la fréquence amont (4) de la seconde paire de signaux à propagation inverse sont séparées par une seconde divergence de fréquence qui est inférieure à la moitié de l'espacement minimal en aval et inférieure à la moitié de l'espacement minimal en amont,
le procédé comprenant:
le filtrage de la première paire de signaux optiques à propagation inverse (3, 7) avec une première fenêtre de filtrage (14) centrée sur une fréquence de filtrage entre les fréquences aval (7) et amont (3) de la première paire, la première fenêtre de filtrage (14) ayant une largeur supérieure à la divergence de fréquence (13) et inférieure à l'espacement minimal en aval (12) et à l'espacement minimal en amont (12), le filtrage de la seconde paire de signaux optiques à propagation inverse avec une seconde fenêtre de filtrage centrée sur une seconde fréquence de filtrage entre les fréquences aval et amont de la seconde paire, la seconde fenêtre de filtrage ayant une largeur supérieure à la seconde divergence de fréquence et inférieure à l'espacement minimal en aval et à l'espacement minimal en amont,
**caractérisé en ce que** le filtrage est effectué par un commutateur sélectif en longueur d'onde, WSS (Wavelength Selective Switch) (16, 17), le WSS (16) comprenant un port d'entrée (21) et une pluralité de ports de sortie sélectifs (19, 18), et étant agencé comme démultiplexeur à longueur d'onde programmable dans la direction en aval (10) et comme multiplexeur à longueur d'onde programmable dans la direction en amont (9), la pluralité de signaux optiques en aval étant transmise d'un premier guide d'ondes (2) au port d'entrée (21) du WSS (16), la pluralité de signaux optiques en amont étant transmise d'un second guide d'ondes (20) aux ports de sortie (19) du WSS (16), dans lequel le filtrage de la première paire de signaux optiques à propagation inverse est effectué entre le port d'entrée (21) et un premier port de sortie sélectif (19) et le filtrage de la seconde paire de signaux optiques à propagation inverse est effectué entre le port d'entrée (21) et un second port de sortie sélectif.

2. Procédé selon la revendication 1, dans lequel les canaux optiques en aval sont agencés sur une grille de fréquences en aval régulière (6) ayant un espacement de grille en aval (12) et les canaux optiques en amont sont agencés sur une grille de fréquences en amont régulière (5) ayant un espacement de grille en amont (12) .

3. Procédé selon la revendication 2, dans lequel deux canaux optiques en aval adjacents (7, 8) quelconques sont séparés par l'espacement de grille en aval (12) sur la grille de fréquences en aval régulière (6), et deux canaux optiques en amont adjacents (3, 4) quelconques sont séparés par l'espacement de grille en amont (12) sur la grille de fréquences en amont régulière (5).

4. Procédé selon l'une quelconque des revendications 2 et 3, dans lequel l'espacement de grille en aval (12) est égal à un multiple entier de l'espacement de grille en amont (12).

5. Procédé selon la revendication 4, dans lequel l'espacement de grille en aval (12) est égal à l'espacement de grille en amont (12).

6. Procédé selon la revendication 1, dans lequel les signaux optiques constituent des paires respectives de signaux optiques à propagation inverse, chaque paire de signaux optiques à propagation inverse étant acheminée par un canal optique en aval respectif et un canal optique en amont respectif adjacent, dans lequel la fréquence aval et la fréquence amont de chaque paire respective de signaux à propagation inverse sont séparées par une divergence de fréquence respective qui est inférieure à la moitié de l'espacement minimal en aval et inférieure à la moitié de l'espacement minimal en amont.

7. Procédé selon la revendication 6, comprenant en outre:
le filtrage de chaque paire respective de signaux optiques à propagation inverse avec une fenêtre de filtrage respective centrée sur une fréquence de filtrage respective entre les fréquences aval et amont de la paire respective, la fenêtre de filtrage respective ayant une largeur supérieure à la divergence de fréquence respective et inférieure à l'espacement minimal en aval et à l'espacement minimal en amont.

8. Procédé selon la revendication 1, comprenant en outre:
la transmission du signal optique en aval (7) de la paire de signaux optiques à propagation inverse (3, 7) du port de sortie sélectif (18) à un port de module d'ajout et de suppression (24) et la transmission du signal optique en amont (3) de la paire de signaux optiques à propagation inverse du port de module d'ajout et de suppression (24) au port de sortie sélectif (18).

9. Procédé selon la revendication 1 ou la revendication 8, comprenant en outre:
la transmission du signal optique en aval (8) de la seconde paire de signaux optiques à propagation inverse du port de sortie sélectif (19) à un port WSS d'un second WSS (17) et la transmission du signal optique en amont (4) de la seconde paire de signaux optiques à propagation inverse du port WSS du second WSS (17) au port de sortie sélectif (19).

10. Procédé selon l'une quelconque des revendications 1 à 9, dans lequel
l'espacement minimal en aval (12) entre les fréquences aval de deux canaux optiques en aval adjacents et l'espacement minimal en amont (12) entre les fréquences amont de deux canaux optiques en amont adjacents sont tous deux supérieurs à 2 fois la vitesse de transmission en bauds.

11. Appareil optique (E) destiné à être utilisé dans un réseau optique WDM (1), comprenant :
un port d'entrée bidirectionnel WDM (2) agencé pour recevoir des signaux optiques en aval dans une direction en aval (10) à une vitesse de transmission en bauds et pour transmettre des signaux optiques en amont dans une direction en amont (9) à la vitesse de transmission en bauds,
dans lequel chaque canal optique en aval est centré sur une fréquence aval (7, 8) et chaque canal optique en amont est centré sur une fréquence amont (3, 4),
dans lequel un espacement minimal en aval (12) entre les fréquences aval (7, 8) de deux canaux optiques en aval adjacents et un espacement minimal en amont (12) entre les fréquences amont (3, 4) de deux canaux optiques en amont adjacents sont tous deux supérieurs à la vitesse de transmission en bauds,
dans lequel les signaux optiques comprennent une première paire de signaux optiques à propagation inverse acheminés par un canal optique en aval et un canal optique en amont adjacent, dans lequel la fréquence aval (7) et la fréquence amont (3) de la première paire de signaux à propagation inverse sont séparées par une première divergence de fréquence (13) qui est inférieure à la moitié de l'espacement minimal en aval (12) et inférieure à la moitié de l'espacement minimal en amont (12),
dans lequel les signaux optiques comprennent une seconde paire de signaux optiques à propagation inverse acheminés par un second canal optique en aval et un second canal optique en amont adjacent, dans lequel la fréquence aval (8) et la fréquence amont (4) de la seconde paire de signaux à propagation inverse sont séparées par une seconde divergence de fréquence qui est inférieure à la moitié de l'espacement minimal en aval et inférieure à la moitié de l'espacement minimal en amont,
un composant ayant un port commun WSS (21) connecté au port d'entrée bidirectionnel WDM (2) et à une pluralité de ports sélectifs (18),
un module d'ajout et de suppression (24) connecté à l'un des ports sélectifs,
le module d'ajout et de suppression comprenant un émetteur (23) et un récepteur (25),
l'émetteur (23) étant configuré pour transmettre le signal optique en amont modulé à la vitesse de transmission en bauds au port sélectif (18),
le récepteur (25) étant configuré pour recevoir le signal optique en aval modulé à la vitesse de transmission en bauds en provenance du port sélectif (18), **caractérisé en ce que** le composant est un commutateur sélectif en longueur d'onde, WSS (16), le WSS (16) étant configuré pour filtrer la première paire de signaux optiques à propagation inverse (3, 7) avec une première fenêtre de filtrage (14) centrée sur une fréquence de filtrage entre les fréquences aval (7) et amont (3) de la première paire, la première fenêtre de filtrage (14) ayant une largeur supérieure à la première divergence de fréquence (13) et inférieure à l'espacement minimal en aval (12) et à l'espacement minimal en amont (12), filtrer la seconde paire de signaux optiques à propagation inverse avec une seconde fenêtre de filtrage centrée sur une seconde fréquence de filtrage entre les fréquences aval et amont de la seconde paire, la seconde fenêtre de filtrage ayant une largeur supérieure à la seconde divergence de fréquence et inférieure à l'espacement minimal en aval et à l'espacement minimal en amont, et
diriger le signal optique en amont du port sélectif (18) vers le port commun WSS (21), le WSS étant agencé comme démultiplexeur à longueur d'onde programmable pour les signaux optiques en aval entrant dans le port commun (21), et comme multiplexeur à longueur d'onde programmable pour les signaux optiques en amont provenant des ports sélectifs (18), le WSS (16) étant configuré pour diriger le signal optique en aval du port commun WSS (21) vers le port sélectif (18),
dans lequel la pluralité de signaux optiques en aval sont transmis d'un premier guide d'ondes (2) au port d'entrée (21) du WSS (16), la pluralité de signaux optiques en amont sont transmis d'un second guide d'ondes (20) aux ports de sortie (19) du WSS (16), le WSS étant configuré pour : effectuer le filtrage de la première paire de signaux optiques à propagation inverse entre le port d'entrée (21) et un premier port de sortie sélectif (19) et effectuer le filtrage de la seconde paire de signaux optiques à propagation inverse entre le port d'entrée (21) et un second port de sortie sélectif.
